# DEMANDE DE BREVET EUROPEEN

(11) **EP 1 571 039 A1**
(43) Date de publication de la demande: **07.09.2005**
(21) Numéro de dépôt: 05300103.8
(22) Date de dépôt: 09.02.2005
(51) Int. Cl.: B60N 2/427

(54) **Siège, notamment pour véhicule automobile**

(30) Priorité: 24.02.2004 FR 0401809
(71) Demandeur: Renault s.a.s., 92100 Boulogne Billancourt (FR)
(72) Inventeur: Makala, Jérôme, 78288 Guyancourt (FR); Cabrié, Dominique, 78114 Magny Les Hameaux (FR)

(57) **Abrégé**

Un siège, notamment pour véhicule automobile, comprend un dossier et une assise. L'assise est équipée d'un baquet 8 comprenant des moyens d'appui anti-sousmarinage 13 et une nappe d'assise 10 recouverte d'une matelassure 11montée sur le baquet 8, laquelle matelassure s'étend au-delà de la nappe et recouvre au moins en partie des moyens de réglage 12 de la pente d'assise de la matelassure localisés à l'avant du baquet.

## Description

La présente invention concerne un siège, notamment un siège de véhicule automobile.

Un siège de véhicule automobile comprend généralement une assise et un dossier, l'assise étant généralement équipée d'une matelassure en mousse comprenant une nappe de maintien constituée par des éléments métalliques. La matelassure en mousse, par exemple en polyuréthane, et la nappe de maintien permettent d'assurer un confort d'assise et sont aptes à filtrer les vibrations pouvant être induites par le revêtement ou par les éléments de suspension du véhicule automobile. Le volume d'assise d'un tel siège est, en partie, déterminé par l'épaisseur de la matelassure.

On connaît, par la demande de brevet WO 02/24032, une chaise de bureau équipée d'une armature comprenant un logement apte à recevoir un cadre en matière plastique sur lequel est montée une nappe de fibres en élastomère, de faible épaisseur, assurant une bonne répartition du poids de l'individu.

Dans une application de type siège de véhicule automobile, il n'est pas envisageable de pouvoir utiliser directement de tels sièges. En effet, les armatures de sièges automobiles peuvent intégrer des fonctions améliorant le confort d'assise ou des fonctions permettant d'accroître la sécurité de l'individu occupant le siège. Les armatures d'assise peuvent comprendre par exemple une bosse dite d'anti-sousmarinage afin d'éviter un glissement de l'individu occupant le siège sous sa ceinture de sécurité lors d'une collision frontale. L'utilisation directe d'une nappe de faible épaisseur fixée sur une armature d'assise engendrerait des interactions entre les cuisses de l'individu utilisant le siège et la bosse d'anti-sousmarinage générant des sensations désagréables et une importante dégradation au niveau du confort, notamment lors d'action sur les pédales d'un conducteur utilisant un tel siège, par exemple lors d'un débrayage.

On connaît également, par le brevet US 4 775 185, un siège de véhicule automobile équipé d'une matelassure en mousse comprenant une portion d'assise prolongée par une portion ajustable en hauteur, située au niveau des cuisses de l'occupant, et permettant de régler la pente d'assise du siège. La portion ajustable comprend, en regard du plancher du véhicule, un dispositif muni d'une poche d'air pouvant être gonflée ou dégonflée par l'occupant via un sélecteur afin de régler à sa convenance le degré d'inclinaison de l'assise du siège.

Un tel siège de véhicule automobile présente l'inconvénient d'engendrer un important volume d'assise et de nécessiter des opérations de montage difficiles afin de pouvoir mettre en place le dispositif de réglage de pente assise sous le siège du véhicule automobile.

La présente invention a donc pour objet de prévoir un siège, notamment un siège de véhicule automobile, comprenant une assise d'encombrement réduit et facilitant la mise en place de moyens assurant une fonction de confort, ou encore de sécurité.

A cet effet, le siège, notamment pour véhicule automobile, comprend un dossier et une assise, ladite assise étant équipée d'un baquet comprenant des moyens d'appui anti-sousmarinage et une nappe d'assise, recouverte d'une matelassure, montée sur le baquet, la matelassure s'étendant au-delà de la nappe et recouvrant au moins en partie des moyens de réglage de la pente d'assise de la matelassure localisés à l'avant du baquet.

Un tel siège présente l'avantage de comprendre une matelassure d'assise, de faible épaisseur, permettant de réduire de façon importante le volume d'assise du siège par rapport au volume d'assise de sièges traditionnels de véhicule automobile. La nappe d'assise assure, en grande partie, la filtration des vibrations ainsi que la répartition du poids de l'individu. Un tel siège, de construction simple, est particulièrement économique.

Un tel siège présente également l'avantage d'être équipé d'un baquet comprenant des moyens permettant d'améliorer le confort de l'occupant ou sa sécurité. Ces différents moyens sont intégrés directement au niveau du baquet et ne sont plus disposés sur une armature de siège. Il devient alors plus aisé de réaliser le montage de ces moyens sur cette pièce facilement manipulable qui sera ensuite rapportée sur le siège.

En outre, un tel baquet intègre des moyens permettant d'améliorer le confort de l'occupant ou sa sécurité en dehors de la zone d'assise de l'occupant. La matelassure, de faible épaisseur et recouvrant la nappe d'assise, en coopération avec des moyens de réglage permet de modifier la pente d'assise de la suspension afin de garantir un confort amélioré pour l'occupant.

Un tel siège présente, en outre, l'avantage de pouvoir être rapporté facilement sur des armatures de sièges dites conventionnelles, grâce au baquet, dont la forme peut être adaptée suivant le véhicule sur lequel le siège est installé.

Dans un mode de réalisation, les moyens d'appui anti-sousmarinage sont disposés à une extrémité avant du baquet.

La nappe d'assise peut avantageusement comprendre des fibres élastomères. Ces fibres présentent l'avantage de bien résister aux sollicitations mécaniques dans le temps et permettent ainsi d'éviter des phénomènes de pochage de l'assise observable sur les suspensions d'assises existantes. La nappe peut comprendre différents types de fibres élastomères suivant une direction longitudinale ou perpendiculaire du siège.

Dans un mode de réalisation, le baquet comprend un logement apte un recevoir un cadre de support sur lequel est montée la nappe, le logement étant agencé de façon tel que la nappe soit maintenue dans une position tendue.

Le cadre de support peut être moulé sur le pourtour extérieur de la nappe.

La nappe d'assise peut avantageusement comprendre des zones où la tension de la nappe est différente.

Les moyens de réglage de la pente d'assise comprennent de préférence un élément déformable, pouvant comprendre au moins un coussin gonflable.

Dans un mode de réalisation, les moyens d'appui anti-sousmarinage sont disposés à une extrémité du baquet. Les moyens d'appui anti-sousmarinage peuvent être rapportés sur le baquet ou préformés dans le baquet.

L'invention sera mieux comprise à l'étude de la description détaillée d'un mode de réalisation nullement limitatif illustré par les dessins annexés, sur lesquels :
- la figure 1 représente une vue schématique en coupe longitudinale d'un siège de véhicule selon un aspect de l'invention;
- la figure 2 représente une vue en coupe transversale partielle selon l'axe II-II de la figure 1 d'un siège de véhicule selon un aspect de l'invention,
- la figure 3 représente en vue de dessus un baquet du siège de véhicule selon un aspect de l'invention, et
- la figure 4 représente une vue schématique en coupe longitudinale d'un siège de véhicule, selon un aspect de l'invention, lors de l'utilisation de moyens de réglage de la pente assise.

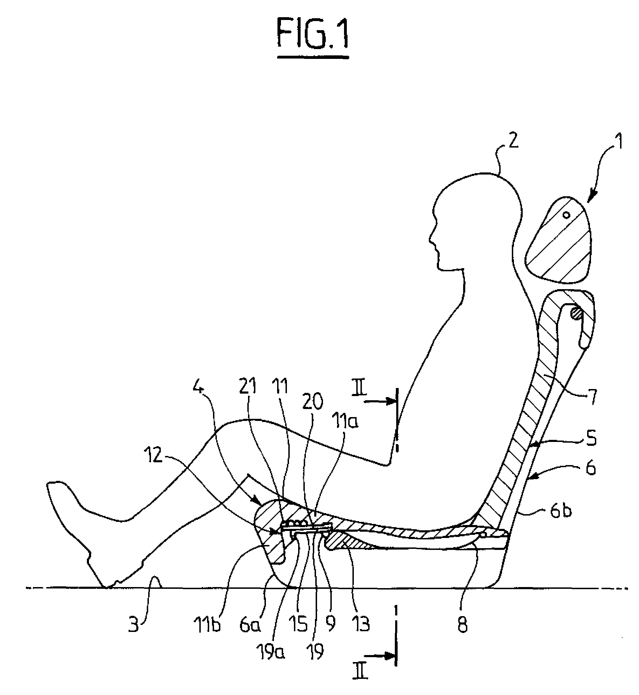

Sur la figure 1, un siège 1 de véhicule automobile (non représenté), à l'intérieur duquel est assis un individu 2, est fixé au niveau d'un plancher 3. Un tel siège 1 peut indifféremment être un siège avant ou un siège arrière de véhicule automobile.

Le siège 1 comprend une assise 4 et un dossier 5. Une armature 6 du siège 1 comprend une armature d'assise 6a s'étendant sensiblement horizontalement et une armature de dossier 6b s'étendant sensiblement verticalement en étant sensiblement inclinée vers l'arrière. Les armatures de dossier 6b et d'assise 6a sont fixées mutuellement de façon rigide. L'armature 6 du siège est représentée ici de façon monobloc. L'armature d'assise 6a est fixée rigidement au plancher 3 par l'intermédiaire de moyens de fixation (non représentés).

Le dossier 5 est recouvert par une première matelassure 7, pouvant être constituée par de la mousse en polyuréthane.

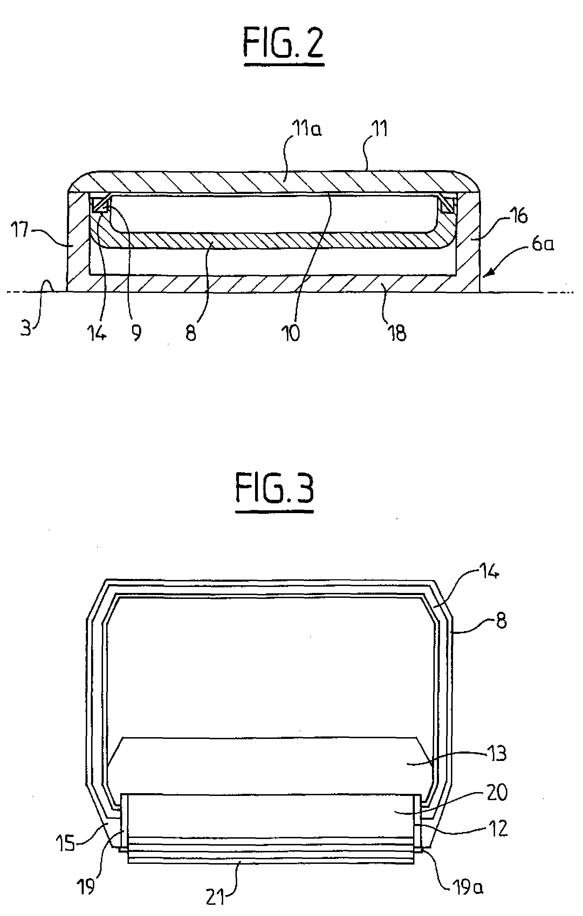

L'assise 4 est équipée d'un baquet 8 sur lequel est fixé un cadre de support 9 comprenant une nappe 10 d'assise (figure 2) recouverte d'une seconde matelassure 11, la matelassure 11 recouvrant des moyens de réglage 12 de la pente d'assise localisés à l'avant du baquet 8. Le baquet 8 comprend également des moyens d'appui 13 anti-sousmarinage à une extrémité avant du baquet 8.

Le baquet 8, de section générale en U (figure 2), s'étend sensiblement horizontalement et a une longueur sensiblement inférieure à celle de l'armature d'assise 6a. Le baquet 8 présente sur son pourtour extérieur un logement, ici sous forme de rainure 14 rectangulaire (figures 2 et 3), apte à recevoir le cadre de support 9.

Le baquet 8 est prolongé, du côté opposé au dossier 5, par une saillie 15, sensiblement parallèle au plancher 3 et s'étendant vers l'avant. Le baquet 8 est fixé au niveau de portions repliées 16 et 17 de l'armature d'assise 6a, sensiblement perpendiculaires à une portion de fixation 18 permettant l'accouplement de l'armature d'assise 6a au plancher 3 (figure 2).

Le cadre de support 9 comprenant la nappe 10 est maintenu dans la rainure 14 (figure 2), de forme correspondante, par des moyens de fixations (non représentés), par exemple des vis auto-taraudeuses. Le cadre de support 9 peut être réalisé en matière plastique. Il peut être alors avantageux de fabriquer le cadre de support 9 dans un moule d'injection à l'intérieur duquel est positionnée au préalable la nappe d'assise 10, on parle alors de surmoulage. La nappe d'assise 10 se retrouve emprisonnée à l'intérieur du cadre de support 9, favorisant ainsi un maintien en tension.

La nappe d'assise 10 comprend deux types de fibres élastomères (non représentés), pouvant être des fibres de type Hytrel RTM ®, entrelacées de manière complexe à l'intérieur d'un textile. Chaque type de fibre est associé à une direction et procure une raideur différente selon la direction considérée. Dans une direction perpendiculaire à une direction longitudinale du siège dite direction latérale, la nappe 10 comprend des fibres d'une raideur importante permettant de supporter le poids de l'occupant, pendant que dans la direction longitudinale du siège, la nappe 10 comprend des fibres d'une raideur sensiblement inférieure assurant une bonne répartition du poids de l'occupant. De telles fibres ont de bonnes propriétés de résistance aux sollicitations mécaniques et à la fatigue afin d'éviter l'apparition des phénomènes de pochage au cours du temps.

La rainure 14 du baquet 8 est réalisée ici, de façon non limitative, sous la forme d'un octogone irrégulier (figure 3). La rainure 14, apte à recevoir le cadre de support 9, est agencée de façon à maintenir le cadre de support 9 dans une position étirée par rapport à sa position avant montage. Cet allongement des dimensions du cadre de support 9 d'environ 5% est réalisable grâce aux propriétés élastiques du matériau utilisé, par exemple un matériau plastique du type poplypropylène. La nappe 10 est ainsi maintenue sous tension, par l'intermédiaire du cadre de support 9, sa longueur étant plus importante lorsque le cadre de support 9 est monté au niveau du baquet 8, que sa longueur à vide.

La tension de la nappe 10 est déterminée par le rapport de sa longueur sous tension, dite "lₜ" par sa longueur à vide, "lᵥ". Il devient ainsi possible, de privilégier un rapport lₜ / lᵥ différent pour les directions longitudinale et latérale du siège selon le niveau de confort réalisé. Il est également envisageable de concevoir le cadre de support 9 afin de réaliser des zones où la tension de la nappe 10 est différente, en modifiant localement et selon la zone considérée le rapport lₜ / lᵥ.

L'utilisation d'une telle nappe 10 peut donc permettre de concevoir un siège 1 comprenant des zones où une tension de support plus importante est privilégiée, par exemple au niveau des cuisses et/ou de la partie postérieure entre les cuisses et le tronc de l'occupant, afin d'accroître le confort de l'occupant.

La matelassure 11 comprend une première portion 11a, d'épaisseur variable, apte à recevoir l'occupant du siège et recouvrant la nappe 10 et prenant appui sur les portions repliées 16 et 17 de l'armature d'assise 6a (figure 2). La première portion 11a est prolongée sensiblement perpendiculairement par une portion d'extrémité 11b à l'avant du siège 1 recouvrant partiellement l'armature d'assise 6a.

Le baquet 8 comprend une pièce de liaison 19, sensiblement plate, s'étendant le long de la saillie 15 et recouvrant une partie de la nappe 10. La pièce de liaison 19 comprend à une extrémité une collerette 19a coopérant avec le bord extérieur de la saillie 15 pour assurer sa fixation sur le baquet.

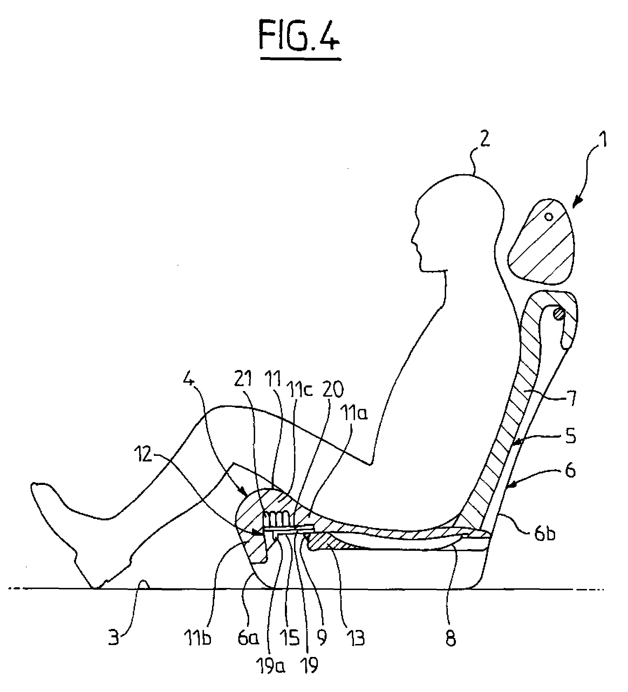

La pièce de liaison 19 est apte à supporter les moyens 12 de réglage de la pente assise. Les moyens 12 de réglage comprennent une plaque rigide 20 fixée au niveau de la plaque de liaison 19 et comprenant, à une extrémité dirigée vers l'avant du siège 1, un élément déformable 21, par exemple un coussin gonflable, relié à une pompe à air via une commande de gonflage (non représentées). Cet élément déformable, de conception connue, permet par sa variation de volume de générer une saillie 11c au niveau de la première portion 11a (figure 4). La saillie 11c (figure 4) permet ainsi de modifier l'angle des cuisses de l'occupant par rapport à son tronc, à sa convenance, afin d'obtenir une position plus confortable.

Bien entendu, l'utilisation de tels moyens 12 de réglage n'est nullement limitatif, il est possible de prévoir et d'installer d'autre types de moyens de réglage au niveau de la saillie 15 du baquet 8 permettant d'améliorer le confort d'assise ou d'autre moyens permettant d'améliorer la sécurité de l'individu occupant le siège.

Le baquet 8 comprend des moyens 13 d'appui anti-sousmarinage, du côté opposé au dossier 9. Les moyens 13 d'appui comprennent une bosse préformée dans le baquet 8 permettant de coupler l'occupant avec le siège lorsqu'il s'enfonce dans l'assise 8 lors d'une collision frontale, afin qu'il ne glisse pas sous une ceinture de sécurité (non représentée) pouvant provoquer des lésions à l'abdomen de l'occupant.

Il est également possible de disposer des moyens 13 d'appui anti-sousmarinage, de façon rapportée dans le baquet 12, aptes à venir se gonfler en cas d'accident permettant de comprimer la mousse 17 afin de venir coupler l'occupant avec le siège avant qu'il ne se déplace.

Les moyens 12 de réglage de la pente assise ainsi que les moyens 13 d'appui anti-sousmarinage sont situés en dehors de la zone d'assise de l'occupant et ne sont pas en interaction avec les cuisses de l'occupant.

Un tel siège comprenant un baquet sur lequel est montée une nappe d'assise recouverte d'une matelassure permet de réduire sensiblement l'encombrement de l'assise du siège et intègre d'une manière simplifiée, grâce au baquet, des moyens permettant de remplir des fonctions de confort et de sécurité de l'occupant.

## Revendications

1. Siège, notamment pour véhicule automobile, comprenant un dossier et une assise, **caractérisé par le fait que** l'assise est équipée d'un baquet (8) comprenant des moyens d'appui anti-sousmarinage (13) et une nappe d'assise (10) recouverte d'une matelassure (11) montée sur le baquet (8), la matelassure s'étendant au-delà de la nappe et recouvrant au moins en partie des moyens de réglage (12) de la pente d'assise de la matelassure localisés à l'avant du baquet.

2. Siège selon la revendication 1, **caractérisé par le fait que** les moyens (13) d'appui anti-sousmarinage sont disposés à une extrémité avant du baquet (8).

3. Siège selon les revendications 1 ou 2, **caractérisé par le fait que** la nappe (10) comprend des fibres élastomères.

4. Siège selon la revendication 3, **caractérisé par le fait que** la nappe (10) comprend différents types de fibres élastomères suivant une direction longitudinale ou perpendiculaire du siège.

5. Siège selon l'une quelconque des revendications précédentes, **caractérisé par le fait que** le baquet comprend un logement (14) apte à recevoir un cadre de support (9) sur lequel est montée la nappe (10), le logement (14) étant agencé de façon telle que la nappe soit maintenue dans une position tendue.

6. Siège selon la revendication 5, **caractérisé par le fait que** le cadre de support (9) est moulé sur le pourtour extérieur de la nappe (10).

7. Siège selon les revendications 5 ou 6, **caractérisé par le fait que** la nappe d'assise (10) comprend des zones où la tension de la nappe d'assise est différente.

8. Siège selon l'une quelconque des revendications précédentes, **caractérisé par le fait que** les moyens de réglage (12) de la pente d'assise comprennent un élément déformable.

9. Siège selon la revendication 8, **caractérisé par le fait que** l'élément déformable comprend au moins un coussin gonflable.

10. Siège selon l'une quelconque des revendications précédentes, **caractérisé par le fait que** les moyens (13) d'appui anti-sousmarinage sont rapportés sur le baquet.

11. Siège selon l'une quelconque des revendications précédentes, **caractérisé par le fait que** les moyens (13) d'appui anti-sousmarinage sont préformés dans le baquet.
